# NEUE EUROPÄISCHE PATENTSCHRIFT

(11) **EP 1 226 692 B2**
(45) Veröffentlichungstag und Bekanntmachung des Hinweises auf die Entscheidung über den Einspruch: **24.04.2013**
(45) Hinweis auf die Patenterteilung: 27.09.2006
(21) Anmeldenummer: 00967581.0
(22) Anmeldetag: 19.09.2000
(51) Int. Cl.: H04L 29/06, H04W 28/06, H04L 29/08

(54) **VERFAHREN ZUM BETREIBEN EINES MOBILFUNKNETZES**
METHOD FOR OPERATING A MOBILE RADIOTELEPHONE NETWORK
PROCEDE POUR FAIRE FONCTIONNER UN RESEAU DE TELEPHONIE MOBILE

(30) Priorität: 21.10.1999 DE 19950653
(43) Veröffentlichungstag der Anmeldung: 31.07.2002
(60) Teilanmeldung: 06113477.1
(73) Patentinhaber: IPCom GmbH & Co. KG, 82049 Pullach (DE)
(72) Erfinder: HANS, Martin, 31141 Hildesheim (DE); BECKMANN, Mark, 31789 Hameln (DE)
(74) Vertreter: Molnia, David
(86) Internationale Anmeldenummer: PCT/DE2000/003247
(87) Internationale Veröffentlichungsnummer: WO 2001/030042

(56) Entgegenhaltungen:
- WO-A-96/21984
- WO-A-97/48212
- DE-A- 19 847 679

## Beschreibung

### Stand der Technik

Die Erfindung geht von einem Verfahren zum Betreiben eines Mobilfunknetzes nach der Gattung des Hauptanspruchs aus.

Aus der noch nicht vorveröffentlichten deutschen Patentanmeldung mit dem Aktenzeichen 1 99 44 334.3 ist bereits ein Verfahren zum Betreiben eines Mobilfunknetzes bekannt, in dem Daten durch eine erste Konvergenzprotokollschicht vor dem Übertragen an eine zweite Konvergenzprotokollschicht, insbesondere auf derselben Protokollebene, zu mindestens einer ersten Einheit, insbesondere einer Paketdateneinheit, zusammengesetzt werden, wobei die Daten von einem Nutzer in einer Netzwerkschicht an die erste Konvergenzprotokollschicht geliefert werden.

Aus der DE 198 47 679 A1 ist ein Verfahren zum Betreiben eines Mobilfunknetzes bekannt, bei dem Daten durch eine erste Konvergenzprotokollschicht zu Einheiten zusammengesetzt werden, bevor eine Übertragung an eine zweite Protokollschicht auf derselben Protokollebene erfolgt. Daten werden durch einen von mehreren Nutzern der Konvergenzprotokollschicht an eine erste Konvergenzprotokollschicht geliefert. Das Verfahren umfasst das Zuordnen mindestens einer Zugriffspunktkennung zu jedem Teilnehmer sowie das Austauschen mindestens einer Einstellmeldung zwischen der ersten und der zweiten Schicht, wobei jede Meldung eine Kennung zum Daten-Kompressions/Entkompressions-Algorithmus, einen Satz von Parametern für den gekennzeichneten Algorithmus sowie eine Bitkarte der Zugriffspunktkennungen enthält, wobei die Bitkarte diejenigen Zugriffspunktkennungen kennzeichnet, die den gekennzeichneten Algorithmus verwenden sollen wie auch diejenigen, die ihn nicht verwenden sollen.

Für Mobilfunksysteme nach dem UMTS Standard sind Konvergenzprotokollschichten bekannt.

Das Dokument 3GPP TS RAN 25.323 V 0.1.0 bezieht sich auf das "Packet Data Convergence Protocol" (PDCP) im UMTS Standard. Durch dieses Protokoll werden Datenpakete (PDCP-SDU), die von höheren Schichten des Mobilfunknetzes stammen, in sogenannten PDCP-Einheiten oder PDCP-Protokollinstanzen konvergiert und mittels eines Trägers an die darunterliegende RLC-Verbindungssteuerungsschicht transportiert.

Das Dokument 3GPP TS 25.331 V 1.1.0 betrifft das Protokoll zur Funkressourcensteuerung RRC im UMTS Standard. Durch dieses Protokoll werden Träger auf- und abgebaut. Zu jedem auf- oder abzubauenden Träger wird eine korrespondierende RLC-Einheit in der RLC-Verbindungssteuerungsschicht erzeugt.

Das Dokument 3GPP TS 25.301 V 3.2.0 betrifft die Protokollarchitektur der Funkschnittstelle im UMTS Standard und offenbart, dass das RRC-Protokoll geeignet ist, auf die PDCP-Schicht zuzugreifen, um diese mittels Steuernachrichten (CPDCPs) zu konfigurieren.

Für den GPRS/GSM Standard sind ebenfalls Konvergenzprotokolle bekannt.

Das GPRS/GSM-Dokument ETSI TS 191 297 V 7.0.0 (GSM 04.65) betrifft die GSM/GPRS Konvergenzschicht, Subnetwerk Dependent Convergence Protocol Layer (SNDCP) sowie deren Konfiguration mittels entsprechender Steuernachrichten (LL-ESTABLISH.request). Die LL-Establish.request-Nachricht enthält einen SNDCP-Block mit XID Parametern, die dem Konfigurieren von Kompressionseinheiten in der SNDCP-Schicht dienen.

Das Dokument Tdoc NP-99260, Change Request A043r1, ein Änderungsvorschlag zum GSM 04.65 des GPRS/GSM Standards und offenbart, dass die Kompressionseinheiten während der Konfiguration der SNDCP-Schicht explizit nummeriert werden können.

Wie auch die Beschwerdekammer 3.5.05 des Europäischen Patentamts in der Entscheidung T 0444/10 festgestellt hat, offenbart keines der zitierten Dokumente des UMTS Standards und keines der zitierten Dokumente des GPRS/GSM Standards, dass bei der Konfiguration der PDCP-Protokollinstanz eine Protokollinstanzidentität festgelegt wird, durch die die Protokollinstanz referenzierbar ist. Weiter ist diesen Dokumenten nicht zu entnehmen, dass die Protokollinstanzidentität derart festgelegt wird, dass sie der Identität des ihr zugeordneten Trägers entspricht. Schließlich offenbart keines dieser Dokumente, dass bei der Konfiguration der Träger festgelegt wird, über den die Nutzdaten von der Protokollinstanz an die Verbindungssteuerungsschicht übertragen werden, wobei die Konfigurationsaufforderung in dem Fall, in dem ein Träger mittels einer Trägerkonfigurationsnachricht aufgebaut, rekonfiguriert oder abgebaut wird, in die Trägerkonfigurationsnachricht eingefügt wird. Des Weiteren ist, wie auch auch die Beschwerdekammer festgestellt hat, nicht durch diese Dokumente, einzeln oder in Kombination, nahegelegt, die Protokollinstanzidentität derart festzulegen, dass sie der Identität des ihr zugeordneten Trägers entspricht, und bei der Konfiguration den Träger festzulegen, über den die Nutzdaten von der Protokollinstanz an die Verbindungssteuerungsschicht übertragen werden, wobei die Konfigurationsaufforderung in dem Fall, in dem ein Träger mittels einer Trägerkonfigurationsnachricht aufgebaut, rekonfiguriert oder abgebaut wird, in die Trägerkonfigurationsnachricht eingefügt wird.

### Vorteile der Erfindung

Das erfindungsgemäße Verfahren mit den Merkmalen des Hauptanspruchs hat demgegenüber den Vorteil, dass mindestens eine Protokollinstanz der ersten Konvergenzprotokollschicht in Abhängigkeit einer von der zweiten Funkstation empfangenen Konfigurationsaufforderung konfiguriert wird, um aus den von dem mindestens einen Nutzer empfangenen Daten die mindestens eine erste Dateneinheit zu bilden und durch einen Träger an eine Verbindungssteuerungsschicht zu übertragen. Auf diese Weise lassen sich in der ersten Funkstation Protokollinstanzen erzeugen, deren Einstellungen und Funktion mit den Einstellungen und der Funktion entsprechender Protokollinstanzen der zweiten Funkstation übereinstimmen, so daß eine einwandfreie Funktion der Protokollinstanzen bei der Übertragung der Dateneinheiten zwischen den beiden Funkstationen gewährleistet wird.

Vorteilhaft ist auch, daß bei der Konfiguration eine Protokollinstanzidentität festgelegt wird, durch die die Protokollinstanz referenzierbar ist. Auf diese Weise läßt sich auf die Protokollinstanz für spätere Um- oder Rekonfigurierungen sowie für einen Abbau der Protokollinstanz schnell und direkt zugreifen.

Ein weiterer Vorteil besteht darin, daß die Protokollinstanzidentität derart festgelegt wird, daß sie der Identität des ihr zugeordneten Trägers entspricht. Auf diese Weise kann die Übertragung eines zusätzlichen Informationselementes zur Identifikation der Protokollinstanz und somit Übertragungsbandbreite eingespart werden.

Weiter vorteilhaft ist, dass bei der Konfiguration der Träger festgelegt wird, über den die Nutzdaten von der Protokollinstanz an die Verbindungssteuerungsschicht übertragen werden.

Ein weiterer Vorteil besteht auch darin, daß die Konfigurationsaufforderung in dem Fall, in dem ein Träger mittels einer Trägerkonfigurationsnachricht aufgebaut, rekonfiguriert oder abgebaut wird, in die Trägerkonfigurationsnachricht eingefügt wird. Auf diese Weise kann ein zusätzliches Informationselement für die Übertragung der Konfigurationsaufforderung und somit Übertragungsbandbreite eingespart werden.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß mit der Konfigurationsaufforderung mindestens eine von der zweiten Funkstation unterstützte Auswahl an alternativen Einstellungen für die Protokollinstanz vorgegeben wird. Auf diese Weise kann die erste Funkstation in Abhängigkeit ihrer eigenen Fähigkeiten oder ihres eigenen Leistungsumfangs und/oder in Abhängigkeit einer Benutzervorgabe aus den alternativen Einstellungen die für das erste Funkgerät günstigste Einstellung auswählen.

Vorteilhaft ist auch, daß von der ersten Funkstation ein Bestätigungssignal an die zweite Funkstation übertragen wird, in dem die von der ersten Funkstation ausgewählte und vorgenommene Einstellung der zweiten Funkstation mitgeteilt wird. Auf diese Weise kann die zweite Funkstation ihre mindestens eine Protokollinstanz in Abhängigkeit der für die erste Funkstation vorgenommenen Einstellung konfigurieren, um eine einwandfreie Funktion der Protokollinstanzen bei der Übertragung der Dateneinheiten zwischen den beiden Funkstationen zu gewährleisten.

Besonders vorteilhaft ist es, wenn von der ersten Funkstation an die zweite Funkstation vor Erhalt der Konfigurationsaufforderung eine Mitteilung übertragen wird, die angibt, welche Einstellungen der mindestens einen Protokollinstanz von der ersten Funkstation unterstützt werden. Auf diese Weise kann sichergestellt werden, daß die zweite Funkstation der ersten Funkstation mittels der Konfigurationsaufforderung nur solche Einstellungen für die Konfiguration der mindestens einen Protokollinstanz fest oder wählbar vorgibt, die auch in der ersten Funkstation realisierbar sind.

Ein weiterer Vorteil besteht darin, daß die Mitteilung zusammen mit einer Nachricht über die Fähigkeiten und den Leistungsumfang der ersten Funkstation an die zweite Funkstation übertragen wird. Auf diese Weise kann ein zusätzliches Informationselement für die Übertragung der Mitteilung und somit Übertragungsbandbreite eingespart werden.

Vorteilhaft ist außerdem, daß das Bestätigungssignal in eine Nachricht eingefügt wird, mit der die erste Funkstation den Aufbau oder die Rekonfiguration des Trägers quittiert. Auf diese Weise kann ein zusätzliches Informationselement für die Übertragung des Bestätigungssignals und somit Übertragungsbandbreite eingespart werden.

### Zeichnung

Ein Ausführungsbeispiel ist in der Zeichnung dargestellt und in der nachfolgenden Beschreibung näher erläutert. Es zeigen Figur 1 ein Mobilfunknetz mit zwei Funkstationen, Figur 2 eine Protokollschichtenfolge für die beiden Funkstationen, Figur 3 einen Ausschnitt aus der Protokollschichtenfolge einer ersten der beiden Funkstationen, Figur 4 einen ersten zeitlichen Verlauf eines Signalisierungsaustauschs zwischen den beiden Funkstationen, Figur 5 einen zweiten zeitlichen Verlauf eines Signalisierungsaustauschs zwischen den beiden Funkstationen, Figur 6 ein Nachrichtenelement zur Mitteilung der Fähigkeiten oder des Leistungsumfangs der ersten Funkstation, Figur 7 eine Trägerkonfigurationsnachricht und Figur 8 eine Quittierungsnachricht.

### Beschreibung des Ausführungsbeispiels

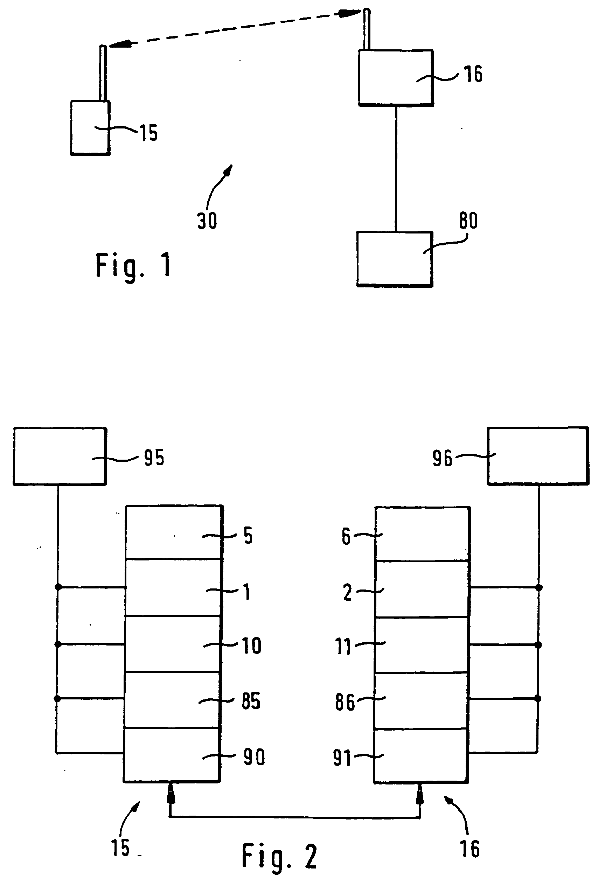

In Figur 1 kennzeichnet 30 ein Mobilfunknetz, in dem eine erste Funkstation 15 und eine zweite Funkstation 16 angeordnet sind. Die zweite Funkstation 16 ist dabei mit einer Netzwerkeinheit 80 verbunden, die Dienste für Teilnehmer im Mobilfunknetz 30 anbietet und das Mobilfunknetz 30 betreibt. Bei der ersten Funkstation 15 handelt es sich in diesem Beispiel um einen Teilnehmer des Mobilfunknetzes 30, beispielsweise in Form eines mobilen Telekommmunikationsendgerätes oder einer Mobilstation, insbesondere in Form eines Mobiltelefons. Im folgenden soll die erste Funkstation 15 als Mobilstation ausgebildet sein. Bei der zweiten Funkstation 16 handelt es sich in diesem Beispiel um eine Basisstation des Mobilfunknetzes 30. Für die Erfindung ist es jedoch nicht relevant, ob es sich bei der ersten Funkstation 15 bzw. bei der zweiten Funkstation 16 um einen Teilnehmer oder um eine Basisstation des Mobilfunknetzes handelt. Das Mobilfunknetz 30 umfaßt dabei in der Regel weitere Basisstationen und Teilnehmer, die aber in Figur 1 nicht dargestellt sind.

Das Mobilfunknetz 30 kann beispielsweise gemäß einem GSM-Standard (Global System for Mobile Communications) oder gemäß einem UMTS-Standard (Universal Mobile Telecommunications System) oder dergleichen betrieben werden.

Die Erfindung betrifft ein Paketdaten-Konvergenzprotokoll für Mobilfunknetze. Insbesondere schlägt diese Erfindung Funktionalitäten innerhalb einer Konvergenzprotokollschicht 1,2 gemäß Figur 2 vor, die beispielsweise in einem Mobilfunksystem nach dem UMTS-Standard (Universal Mobile Telecommunications System) oder auch in einem Mobilfunksystem nach dem GSM-Standard Anwendung finden kann. Im folgenden soll beispielhaft angenommen werden, daß das Mobilfunknetz 30 gemäß dem UMTS-Standard betrieben wird.

Das gemäß dem UMTS-Standard verwendete Konvergenzprotokoll wird dabei als PDCP (Packet Data Convergence Protocol) bezeichnet.

Die Funktionalitäten des UMTS-Mobilfunksystems werden wie auch beim GSM-Mobilfunksystem gemäß Figur 2 in Schichten aufgeteilt und innerhalb der Schichten werden verschiedene Protokolle spezifiziert, die den höheren Schichten jeweils Dienste zur Verfügung stellen und die von unterhalb liegenden Schichten angebotene Dienste nutzen. Jedes Protokoll existiert dabei innerhalb des Mobilfunksystems mindestens zwei mal, nämlich in mindestens zwei Einheiten, wobei die Einheiten jeweils in der gleichen Schicht liegen. Eine erste der beiden Einheiten stellt dabei die Mobilstation 15 dar. Eine zweite der beiden Einheiten stellt die Basisstation 16 dar. Die beschriebene Schichthierarchie wird dabei in eine Nutzerebene und in eine Steuerebene eingeteilt. Die Nutzerebene wird auch als User-Plane bezeichnet und die Steuerebene wird auch als Control-Plane bezeichnet. Protokolle, in denen Nutzdaten transportiert werden, sind dabei der Nutzerebene zugeordnet. Protokolle, in denen Steuerdaten transportiert und teilweise erzeugt werden, sind der Steuerebene zugeordnet. Für diese Erfindung ist die Schicht- oder Protokollhierarchie der Nutzerebene relevant, da die Konvergenz-Protokollschicht in der Nutzerebene liegt und Dienste zum Nutzdatentransport bereitstellt. Nutzdaten, die von Applikationen in Paketen erzeugt werden und paketorientiert übertragen werden sollen, werden von der entsprechenden Applikation zunächst einem Transportschicht-Protokoll in einer Transportschicht übergeben. Bekannt sind hier das TCP (Transmission Control Protocol) und das UDP (User Datagram Protocol). Aber es sind auch andere Transportschicht-Protokolle oder eine transparente Transportschicht denkbar, durch die die zu übertragenden Nutzdaten transparent ohne Nutzung eines Transportschicht-Protokolls durchgereicht werden. Die Transportschicht-Protokolle dienen dazu, um die Paketdaten für den Transport durch das Mobilfunknetz 30, das in diesem Fall als Paketdatennetz dient, zu sichern und ihnen die nötigen Routing-Informationen hinzuzufügen. Die Transportschicht nutzt Dienste eines Netzwerkprotokolls in einer unterhalb der Transportschicht liegenden Netzwerkschicht. Die Netzwerkschicht ist in Figur 2 dargestellt und mit dem Bezugszeichen 5 für die Mobilstation 15 und mit dem Bezugszeichen 6 für die Basisstation 16 gekennzeichnet. Die Netzwerkprotokolle werden wie beschrieben als PDP (Packet Data Protocol = Paket-Daten-Protokoll) bezeichnet. Die Transportschicht nutzt die Dienste der PDPs, um die Nutzdaten zu übertragen. Die bekanntesten PDPs der Netzwerkschicht 5, 6 sind das IP (Internet Protocol) und das X.25-Protokoll. Sowohl die Netzwerk- als auch die Transportprotokolle können den Nutzdaten Kontrolldaten hinzufügen, beispielsweise in Form einer TCP-/IP-Kopfinformation bzw. eines TCP-/IP-Headers. Unterhalb der Netzwerkschicht 5, 6 liegen nun die UMTSspezifischen Protokolle. Mit jedem PDP werden Daten über die von dem PDP genutzte Datenverbindung im Mobilfunknetz 30 und in einem mit dem Mobilfunknetz 30 kommunizierenden Endgerät des Mobilfunknetzes, bspw. in der Mobilstation 15, gespeichert. Diese Daten können beispielsweise Parameter über die Dienstequalität QOS beinhalten und werden als PDP-Kontext bezeichnet. Es ist möglich, ein PDP gleichzeitig mit verschiedenen Kontexten zu betreiben, wobei sich die Kontexte nur in den Parametern für die Dienstequalität QOS unterscheiden. Es kann also in einem Endgerät ein IP-Protokoll mit einer IP-Adresse einmal mit einem ersten Parameter für die Dienstequalität QOS und einmal mit einem zweiten Parameter für die Dienstequalität QOS betrieben werden. PDP-Kontexte können jedoch auch auf verschiedenen Netzwerkprotokollen basieren. So kann es beispielsweise vorgesehen sein, daß in einem Endgerät drei verschiedene Netzwerkprotokolle laufen: 2 IP-Protokolle mit unterschiedlicher IP-Adresse und ein X.25-Protokoll.

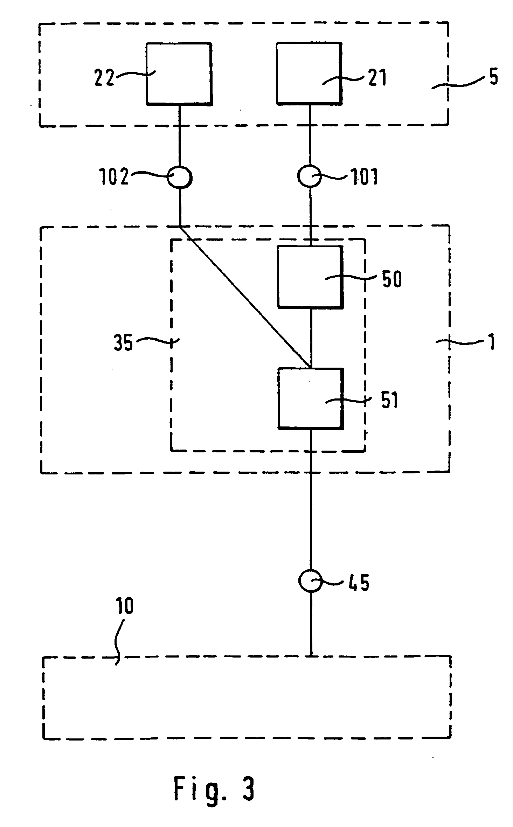

Jeder dieser PDP-Kontexte wird als eigenständiger Block in der Netzwerkschicht 5, 6 oberhalb der Konvergenzprotokollschicht 1, 2 dargestellt und in Figur 3 für die Mobilstation 15 mit den Bezugszeichen 21 und 22 gekennzeichnet. Die PDP-Kontexte 21, 22 stellen dabei Nutzer der unterhalb der Netzwerkschicht 5, 6 liegenden Konvergenzprotokollschicht 1, 2 gemäß Figur 3 dar. In Figur 2 ist dabei die Konvergenzprotokollschicht für die Mobilstation 15 mit dem Bezugszeichen 1 und die Konvergenzprotokollschicht für die Basisstation 16 mit dem Bezugszeichen 2 gekennzeichnet.

Das PDCP, dessen Aufgabe es ist, die zwischen Mobilstation 15 und Basisstation 16 zu übertragenden Daten für eine effiziente UMTS-Übertragung aufzubereiten, paßt die Nutzdaten, die von einem PDP-Kontext kommen, der Übertragung über eine Luftschnittstelle an, indem es die Nutzdaten und/oder die den Nutzdaten zugefügten Kontrolldaten oder Protokollsteuerinformationen optional komprimiert und eventuell Paketdatenströme von verschiedenen PDP-Kontexten 21, 22, die die gleiche Übertragungsqualität benötigen, zu einem Paketdatenstrom zusammensetzt oder multiplext.

Unterhalb der für die Bildung des PDCP vorgesehenen Konvergenzprotokollschicht 1, 2 befindet sich im Schichtmodell des UMTS-Mobilfunksystems eine RLC-Verbindungssteuerungsschicht (Radio Link Control), die für die Mobilstation 15 mit dem Bezugszeichen 10 und für die Basisstation 16 mit dem Bezugszeichen 11 in Figur 2 gekennzeichnet ist und die optional Übertragungsfehler der Luftschnittstelle korrigiert, indem sie auf der Empfängerseite fehlerhafte Pakete wieder anfordert und auf der Senderseite erneut verschickt. Desweiteren sorgt die RLC-Verbindungssteuerungsschicht 10, 11 optional dafür, daß die Reihenfolge der Datenpakete bei der Übertragung erhalten bleibt und sie segmentiert die Datenpakete in sogenannte RLC-PDUs (RLC Packet Data Unit), deren Länge den verwendeten Übertragungskanälen angepaßt ist.

Für die Übertragung eines jeden gemultiplexten Paketdatenstroms von verschiedenen PDP-Kontexten 21, 22 wird dann ein Datenträger, der auch als Radio Bearer oder RB bezeichnet wird, benutzt, den die unterhalb der Konvergenzprotokollschicht 1, 2 liegende RLC-Verbindungssteuerungsschicht 10, 11 bereitstellt.

Die Konvergenzprotokollschicht 1, 2 besteht aus sogenannten PDCP-Protokollinstanzen 35 gemäß Figur 3, von denen jede mehrere Kompressionsalgorithmen 50, 51 enthalten kann. Mehrere PDP-Kontexte 21, 22 können mit einer PDCP-Protokollinstanz 35 verbunden sein, jedoch kann ein PDP-Kontext 21, 22 mit nur einer PDCP-Protokollinstanz 35 verbunden sein. Jede PDCP-Protokollinstanz 35 nutzt genau einen sogenannten Träger 45, der auch als Radio Bearer bezeichnet wird. Ein Radio Bearer ist die Verbindung zwischen einer PDCP-Protokollinstanz 35 und einer Instanz der darunterliegenden RLC-Verbindungssteuerungsschicht 10, 11 (Radio Link Control = Funkverbindungssteuerung), über die die Daten von der Konvergenzprotokollschicht 1, 2 an die RLC- Verbindungssteuerungsschicht 10, 11 weitergegeben werden. Die bekannten Kompressionsalgorithmen, wie sie beispielsweise in der Veröffentlichung RFC 1144 "Compressing TCP/IP-Headers for Low Speed serial links) für TCP/IP-Protokolle (TCP = Transmission Protocol; IP = Internet Protocol) und in der Veröffentlichung RFC 2507 "IP Header Compression" für UDP/IP-Protokolle (UDP = User Datagram Protocol) beschrieben sind, basieren auf dem Aufbau und der Verwendung sogenannter Codebücher, in denen tabellenartig Codes gespeichert sind, mit denen die zu übertragenden Nutzdaten und/oder Protokollsteuerinformationen in der entsprechenden PDCP-Protokollinstanz 35 der sendenden Funkstation codiert beziehungsweise komprimiert werden und auf die in den so komprimierten Nutzdaten und/oder Protokollsteuerinformationen verwiesen wird. Die verwendeten Codebücher müssen auch im Dekompressor der empfangenden Funkstation bekannt sein, um ein Dekodieren zu ermöglichen.

Um eine einwandfreie Funktion der PDCP-Protokollinstanzen 35 zu gewährleisten, müssen die Kompressionsalgorithmen 50, 51, deren Kompressionsparameter, wie zum Beispiel die Anzahl der im Kompressor und Dekompressor in entsprechenden Codebüchern zu speichernden Codes, sowie die Multiplexinformationen der beiden Konvergenzprotokollschichten 1, 2 in der Mobilstation 15 und in der Basisstation 16 übereinstimmen. Die Multiplexinformationen geben dabei an, welche PDP-Kontexte 21, 22 ihre Paketdatenströme der entsprechenden PDCP-Protokollinstanz 35 zum Multiplexen zuführen. Die Kompressionsalgorithmen 50, 51, die Kompressionsparameter und die Multiplexinformationen stellen sogenannte PDCP-Protokollinstanzparameter dar, die auch noch weitere Parameter, wie beispielsweise Informationen über den von der entsprechenden PDCP-Protokollinstanz 35 zu verwendenden Träger 45, umfassen können. Vor der Einrichtung einer neuen PDCP-Protokollinstanz 35 ist eine Verständigung der beiden Funkstationen 15, 16 über die zu konfigurierenden PDCP-Protokollinstanzparameter erforderlich. Diese Verständigung erfolgt in der Steuerebene durch eine sogenannte Funkressourcensteuerung RRC (Radio Ressource Control), wobei die Funkressourcensteuerung RRC gemäß Figur 2 für die Mobilstation 15 mit dem Bezugszeichen 95 und für die Basisstation 16 mit dem Bezugszeichen 96 gekennzeichnet ist.

Die RLC-Verbindungssteuerungsschicht 10, 11 nutzt die Dienste der darunterliegenden MAC-Schicht (Medium Access Control), um die RLC-PDUs zu übertragen. Die MAC-Schicht ist in Figur 2 für die Mobilstation 15 durch das Bezugszeichen 85 und für die Basisstation 16 durch das Bezugszeichen 86 gekennzeichnet und sorgt für den Zugriff auf das eigentliche Übertragungsmedium, wählt geeignete Transportformate aus und multiplext die verschiedenen RLC-PDUs auf geeignete Transportkanäle, die in der darunterliegenden physikalischen Schicht, die gemäß Figur 2 für die Mobilstation 15 durch das Bezugszeichen 90 und für die Basisstation 16 durch das Bezugszeichen 91 gekennzeichnet ist, auf die zugewiesenen physikalischen Kanäle abgebildet werden. Die beschriebene Schicht- oder Protokollhierarchie ist aus der Veröffentlichung "Radio Interface Protocol Architecture", 3 GPP TS 25.301 bekannt. Einige der beschriebenen Schichten, d.h. die physikalische Schicht 90, 91, die MAC-Schicht 85, 86, die RLC-Verbindungssteuerungsschicht 10, 11 und die Konvergenzprotokollschicht 1, 2 haben auch eine direkte Verbindung zur Funkressourcensteuerung RRC. Diese Verbindung wird genutzt, um Statusinformationen an die Funkressourcensteuerung RRC 95, 96 zu übertragen und um der Funkressourcensteuerung RRC 95, 96 eine Konfiguration der anderen Protokolle zu ermöglichen.

Zwischen der Mobilstation 15 und der Basisstation 16 zu übertragende Daten verlaufen von oben nach unten durch die beschriebene Schichtenfolge. Empfangene Daten verlaufen von unten nach oben durch die beschriebene Schichtenfolge.

Ein Protokoll zur Kontrolle der Funkressourcensteuerung RRC 95, 96 ist in der Veröffentlichung "RRC Protocol Specification", 3GPP TSG RAN WG2, TS 25.331 vl.4.2 beschrieben und wird im folgenden als RRC-Protokoll bezeichnet. Aufgaben dieses RRC-Protokolls sind unter anderem das Konfigurieren der einzelnen Schichten, Verhandlung von Parametern für die Konfiguration der Schichten mit der sogenannten Peer-RRC Schicht und Auf- und Abbau von Verbindungen zwischen der Mobilstation 15 und dem Mobilfunknetz 30 beziehungsweise in diesem Ausführungsbeispiel stellvertretend für das Mobilfunknetz 30 mit der Basisstation 16. Die Peer-RRC Schicht stellt dabei eine Schicht der Funkressourcensteuerung RRC 95, 96 auf derselben Protokollschichtebene wie die zu konfigurierende Schicht der Mobilstation 15 beziehungsweise der Basisstation 16 dar. Die Parameter zur Konfiguration der einzelnen Schichten werden in Nachrichten zwischen den Peer-RRC Schichten der Mobilstation 15 und der Basisstation 16 bezüglich der jeweils zu konfigurierenden Schicht ausgetauscht.

Die in der genannten Veröffentlichung "RRC Protocol Specification" beschriebene Signalisierung beinhaltet bisher jedoch nicht das Aushandeln der PDCP-Protokollinstanzparameter, also beispielsweise weder das Aushandeln der Kompressionsalgorithmen 51, 52 und deren Kompressionsparameter für die PDCP-Protokollinstanzen 35, noch die Konfiguration des Multiplexens der Paketdatenströme meherer PDP-Kontexte 21, 22 in der Konvergenzprotokollschicht 1, 2.

In Figur 3 ist beispielhaft ein Ausschnitt aus der Schichtenfolge für die Mobilstation 15 dargestellt.

In Figur 3 ist die Netzwerkschicht 5, die Konvergenzprotokollschicht 1 und die Verbindungssteuerungsschicht 10 der Mobilstation 15 dargestellt. Dabei nutzt gemäß Figur 3 jeder PDP-Kontext 21, 22 die Dienste der Konvergenzprotokollschicht 1 an einem ihm jeweils zugeordneten Zugriffspunkt 101, 102, der auch als Netzwerkschicht Dienstezugriffspunkt NSAP (Network Layer Service Access Point) bezeichnet werden kann. Jedem dieser Zugriffspunkte 101, 102 ist eine Kennung beispielsweise ein NSAPI (Network Layer Service Access Point Identifier) zugeordnet, der den zugeordneten PDP-Kontext 21, 22 eindeutig kennzeichnet. Für GSM sind derzeit maximal 16 NSAPs gleichzeitig in einer Mobilstation 15 vorgesehen. Für UMTS steht die Anzahl der PDP-Kontexte, die gleichzeitig in einer Mobilstation vorhanden sein können bisher noch nicht fest. Die Verbindungen der Verbindungssteuerungsschicht 10 werden von der Konvergenzprotokollschicht 1 über Dienstzugangspunkte genutzt, die auch als SAP (Service Access Point) bezeichnet werden. Den einzelnen Verbindungen zu den SAPs ist jeweils eine Kennung RB Identity (Radio Bearer Identity) zugeordnet. Um die einzelnen Verbindungen zwischen der Konvergenzprotokollschicht 5 und der Verbindungssteuerungsschicht 10 kennzeichnet. Dabei bietet jeder Dienstzugangspunkt eine bestimmte Dienste- oder Übertragungsqualität QOS und es sind beim GSM-Mobilfunksystem maximal vier verschiedene Dienstzugangspunkte und damit vier verschiedene Verbindungen in der Verbindungssteuerungsschicht 10 mit unterschiedlicher Übertragungsqualität QOS vorgesehen. Beim UMTS-Mobilfunksystem können beispielsweise und ohne Einschränkung auf dieses Beispiel drei verschiedene Dienstzugangspunkte mit jeweils verschiedenen Verbindungen in der Verbindungssteuerungsschicht 10 mit unterschiedlicher Übertragungsqualität QOS vorgesehen sein. Um es der Konvergenzprotokollschicht 1 zu ermöglichen, an einem der Dienstzugangspunkte ankommende oder empfangene Datenpakete nach der Dekompression der Nutzdaten und/oder der Protokollsteuerungsinformationen dieser Datenpakete an den richtigen Empfänger bzw. an den richtigen PDP-Kontext weiterleiten zu können, kann den Datenpaketen vom Sender eine Kennung des empfangenden PDP-Kontextes, also des empfangenden Nutzers der Konvergenzprotokollschicht 1 hinzugefügt werden. Als Kennung kann dazu der NSAPI genutzt werden, der senderseitig jedem Datenpaket beispielsweise als 4-bit-Wert hinzugefügt wird.

Die beschriebenen Verbindungen zu den Dienstzugangspunkten werden durch jeweils einen Träger realisisert, der, wie beschrieben, auch als Radio Bearer bezeichnet wird. Ein Radio Bearer ist, wie beschrieben, die Verbindung zwischen einer PDCP-Protokollinstanz 35 und einer Instanz der darunterliegenden RLC-Verbindungssteuerungsschicht 10, 11, über die die Daten von der Konvergenzprotokollschicht 1, 2 an die RLC- Verbindungssteuerungsschicht 10, 11 weitergegeben werden. In Figur 3 ist stellvertretend für die Dienstzugangspunkte der Träger 45 dargestellt, der stellvertretend für die in der Konvergenzprotokollschicht 1 angeordneten PDCP-Protokollinstanzen die PDCP-Protokollinstanz 35 mit einer in figur 3 nicht dargestellten Instanz der RLC-Verbindungssteuerungsschicht 10 verbindet.

Die beispielhaft beschriebene PDCP-Protokollinstanz 35 der Konvergenzprotokollschicht 1 umfaßt dabei gemäß Figur 3 einen Datenkompressionsalgorithmus 51, der von der Netzwerkschicht 5 empfangene Nutzdaten komprimieren. Dem Datenkompressionsalgorithmus 51 ist dabei ein in Figur 3 nicht dargestellter Datenentkompressionsalgorithmus zugeordnet. Der Datenentkompressionsalgorithmus entkomprimiert von der Verbindungssteuerungsschicht 10 und damit letztlich von der Basisstation 16 empfangene Nutzdaten. Sie machen dabei eine Datenkompression gemäß des zugeordneten Datenkompressionsalgorithmus 51 rückgängig. Die PDCP-Protokollinstanz 35 der Konvergenzprotokollschicht 1 umfaßt weiterhin einen Protokollsteuerinformations-Kompressionsalgorithmus 50, der im folgenden auch als erster Kompressionsalgorithmus 50 bezeichnet wird und der von der Netzwerkschicht 5 mit den Nutzdaten empfangene und/oder in der Konvergenzprotokollschicht 1 für die empfangenen Nutzdaten erzeugte Protokollsteuerinformationen komprimiert. Dem Protokollsteuerinformations-Kompressionsalgorithmus 50 ist in entsprechender Weise ein in Figur 3 nicht dargestellter Protokollsteuerinformations-Entkompressionsalgorithmus zugeordnet, der von der Verbindungssteuerungsschicht 10 empfangene Protokollsteuerinformationen entkomprimiert und so eine Kompression gemäß dem zugeordneten Protokollsteuerinformations-Kompressionsalgorithmus 50 rückgängig macht.

Ein erster PDP-Kontext 21 ist über einen ersten ihm zugeordneten Zugriffspunkt 101 mit dem Protokollsteuerinformations-Kompressionsalgorithmus 50 und einem zugeordneten Protokollsteuerinformations-Entkompressionsalgorithmus verbunden. Im folgenden werden die einander zugeordneten Kompressions- und Entkompressionsalgorithmen zur Vereinfachung der Beschreibung als eine Einheit betrachtet und stellvertretend durch den entsprechenden Kompressionsalgorithmus referenziert. So ist der Protokollsteuerinformations-Kompressionsalgorithmus 50 über den Datenkompressionsalgorithmus 51, der im folgenden auch als zweiter Kompressionsalgorithmus 51 bezeichnet wird, mit dem Träger 45 verbunden.

Ein zweiter PDP-Kontext 22 ist über einen zweiten, ihm zugeordneten, Zugriffspunkt 102 direkt mit dem Datenkompressionsalgorithmus 51 verbunden, der wie beschrieben an den Träger 45 angeschlossen ist. Die restlichen PDP-Kontexte der Netzwerkschicht 5 sind der Übersichtlichkeit halber in Figur 3 nicht dargestellt, genausowenig wie weitere PDCP-Protokollinstanzen der Konvergenzprotokollschicht 1 und weitere Träger.

Kern der Erfindung sind Prozeduren, die die Verhandlung von PDCP-Protokollinstanzparametern und den Aufbau von PDCP-Protokollinstanzen zwischen zwei Einrichtungen des Mobilfunknetzes 30, in diesem Beispiel zwischen der Mobilstation 15 und der Basisstation 16, die mit der Netzwerkeinheit 80, beispielsweise einem Radio Network Controler (RNC) zusammenwirkt und damit stellvertretend als Netzwerkinstanz zu verstehen ist, ermöglichen.

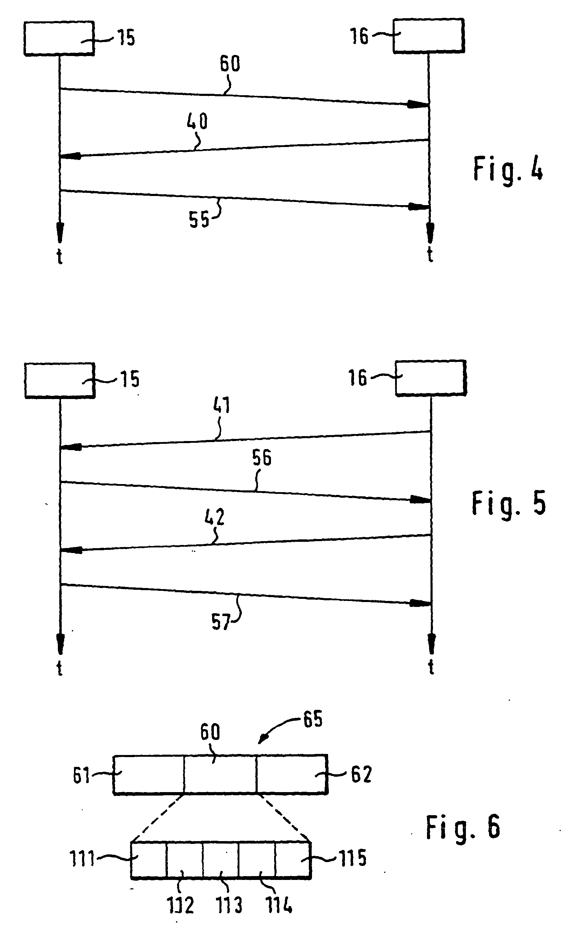

Zu Beginn der Verhandlungen steht dabei eine Prozedur, in der die Basisstation 16 von der Mobilstation 15 eine Mitteilung 60 gemäß Figur 4 über die von der Mobilstation 15 unterstützten Einstellungen der zu konfigurierenden PDCP-Protokollinstanz 35 der Mobilstation 15 erhält. In diesem Beispiel wird dabei beispielhaft die Konfigurierung der in Figur 3 dargestellten PDCP-Protokollinstanz 35 beschrieben. In entsprechender Weise können natürlich auch mehrere PDCP-Protokollinstanzen der Mobilstation 15 gleichzeitig konfiguriert werden.

Unmittelbar vor dem erstmaligen Einrichten der PDCP-Protokollinstanz 35 schickt die Basisstation 16 gemäß Figur 4 eine erste Konfigurationsaufforderung 40 an die Mobilstation 15, in der die erstmalige Einrichtung der PDCP-Protokollinstanz 35 initiiert wird. In dieser ersten Konfigurationsaufforderung 40 sind die PDCP-Protokollinstanzparameter enthalten, die die Basisstation 16 unter Berücksichtigung auf die zuvor erhaltene Mitteilung 60 entsprechend den von der Mobilstation 15 unterstützten Einstellungen der zu konfigurierenden PDCP-Protokollinstanz 35 ausgesucht hat. Die erste Konfigurationsaufforderung 40 wird auch als PDCP Establishment Request bezeichnet.

Es ist der Mobilstation 15 nun möglich, die PDCP-Protokollinstanz 35 mit den in der ersten Konfigurationsaufforderung 40 von der Basisstation 16 empfangenen PDCP-Protokollinstanzparametern aufzubauen. Nach diesem Aufbau quittiert die Mobilstation 15 den Aufbau und signalisiert damit der Basisstation 16 mittels einem ersten Bestätigungssignal 55, daß die PDCP-Protokollinstanz 35 zum Empfangen bzw. Senden von Daten bereit steht. Dieses erste Bestätigungssignal 55 wird auch als PDCP Establishment Confirm bezeichnet.

Es ist alternativ oder zusätzlich denkbar, daß die erste Konfigurationsaufforderung 40 eine von der Basisstation 16 unterstützte Auswahl an Einstellungen beziehungsweise PDCP-Protokollinstanzparametern zur Bildung der PDCP-Protokollinstanz 35 umfaßt, so daß der Mobilstation 15 nach Empfang der ersten Konfigurationsaufforderung 40 die Möglichkeit gegeben wird, seinerseits die PDCP-Protokollinstanzparameter aus der vorgegebenen Auswahl auszusuchen, um die PDCP-Protokollinstanz 35 möglichst optimal an die Fähigkeiten und den Leistungsumfang, gegebenenfalls auch an Benutzervorgaben anzupassen. Mit dem ersten Bestätigungssignal 55, das die Mobilstation 15 dann an die Basisstation 16 schickt, werden der Basisstation 16 die von der Mobilstation 15 gewählten PDCP-Protokollinstanzparameter mitgeteilt.

Mißlingt der Aufbau der PDCP-Protokollinstanz 35, so kann eine entsprechende Nachricht über das Scheitern des Aufbaus von der Mobilstation 15 an die Basisstation 16 anstelle des ersten Bestätigungssignal 55 gesendet werden, wobei diese Nachricht auch als "PDCP Establishment Failure"-Nachricht bezeichnet werden kann.

Die Mitteilung 60 enthält beispielsweise Informationen über die von der Mobilstation 15 unterstützten Kompressionsalgorithmen 50, 51, deren verwendete Kompressionsparameter und die in der Mobilstation 15 möglichen Multiplexverfahren, d.h. die maximale Anzahl der PDP-Kontexte 21, 22 und die mögliche Anzahl der von der Konvergenzprotokollschicht 1 der Mobilstation 15 benutzten Träger.

Die erste Konfigurationsaufforderung 40 enthält Informationen darüber, welche der PDP-Kontexte 21, 22 auf die einzurichtende PDCP-Protokollinstanz 35 zugreifen und welcher Träger 45 von dieser PDCP-Protokollinstanz 35 genutzt werden soll. Desweiteren enthält die ersten Konfigurationsaufforderung 40 entweder feste Vorgaben über den oder die zu verwendenden Kompressionsalgorithmen 50, 51 und die dafür zu verwendenden Kompressionsparameter oder die erste Konfigurationsaufforderung 40 enthält eine Auswahl von möglichen Kompressionsalgorithmen 50, 51 und/oder eine Auswahl von Kompressionsparameter, unter denen sich die Mobilstation 15 einen oder mehrere geeignete Kompressionsalgorithmen 50, 51 und dessen Kompressionsparameter aussuchen kann.

Das erste Bestätigungssignal 55 enthält dann entweder nur die Information, daß die entsprechende PDCP-Protokollinstanz 35 eingerichtet wurde oder zusätzlich Informationen über den oder die ausgesuchten Kompressionsalgorithmen 50, 51 und dessen Kompressionsparameter.

Mißlingt der Aufbau der PDCP-Protokollinstanz 35, so wird die "PDCP Establishment Failure"-Nachricht von der Mobilstation 15 anstelle des ersten Bestätigungssignals 55 an die Basisstation 16 gesendet, die Informationen über den Grund des mißlungenen Aufbaus enthalten kann.

Die erste Konfigurationsaufforderung 40 und das erste Bestätigungssignal 55 enthalten zusätzlich eine PDCP-Protokollinstanzidentität, mit der man später die PDCP-Protokollinstanz 35 referenzieren kann, um sie wieder abzubauen oder zu rekonfigurieren. Die Funktion der PDCP-Protokollinstanzidentität kann auch von der schon in der genannten Veröffentlichung "RRC Protocol Specification" definierten Identität für den Träger 45, die auch als "RB identity (RB Identität)" bezeichnet wird, übernommen werden, da eine PDCP-Protokollinstanz genau einem Träger zugeordnet sein kann.

Nachdem die PDCP-Protokollinstanz 35 eingerichtet wurde, kann es möglich sein, diese zu rekonfigurieren. Dazu schickt die Basisstation 16 eine zweite Konfigurationsaufforderung 41 gemäß Figur 5 an die Mobilstation 15, die angibt, wie die PDCP-Protokollinstanz 35 zu rekonfigurieren ist. Die zweite Konfigurationsaufforderung 41 kann auch als "PDCP reconfigure request"- Nachricht bezeichnet werden. Diese zweite Konfigurationsaufforderung 41 kann zu verschiedenen Zwecken benutzt werden und enthält entsprechend verschiedene Informationen, die Identität des oder der zu rekonfigurierenden PDCP-Protokollinstanzen ist jedoch in der zweiten Konfigurationsaufforderung 41 immer enthalten.

Um die Multiplexfunktion der in diesem Beispiel beschriebenen eingerichteten PDCP-Protokollinstanz 35 zu ändern, kann es sinnvoll sein, der zweiten Konfigurationsaufforderung 41 Informationen über einen oder mehrere neue PDP-Kontexte hinzuzufügen, deren Paketdatenströme in der Konvergenzprotokollschicht 1 der Mobilstation 15 zusätzlich zu den Paketdatenströmen der bereits vorhandenen PDP-Kontexte 21, 22 auf den von der PDCP-Protokollinstanz 35 genutzten Träger 45 gemultiplext werden sollen.

Sollen ein oder mehrere vorhandene PDP-Kontexte 21, 22 einen Träger mit anderen Eigenschaften, beispielsweise mit einer anderen Übertragungsqualität QOS nutzen, kann es sinnvoll sein, der zweiten Konfigurationsaufforderung 41 Informationen über den oder die PDP-Kontexte hinzuzufügen, deren Paketdatenströme in der Konvergenzprotokollschicht 1 der Mobilstation 15 durch die vorhandene PDCP-Protokollinstanz 35 auf einen Träger gemultiplext werden sollen, der die erforderlichen Eigenschaften aufweist.

Soll die PDCP-Protokollinstanz 35 einen oder mehrere andere oder zusätzliche Kompressionsalgorithmen zur Kompression der Nutzdaten oder der Protokollsteuerinformationen verwenden, kann es sinnvoll sein, der zweiten Konfigurationsaufforderung 41 Informationen über diesen oder diese neuen Kompressionsalgorithmen hinzuzufügen.

Die zweite Konfigurationsaufforderung 41 kann von der Mobilstation 15 durch ein zweites Bestätigungssignal 56 gemäß Figur 5, das auch als "PDCP Reconfigure Confirm"-Nachricht bezeichnet werden kann, quittiert werden, um der Basisstation 16 die erfolgreiche Änderung der Konfiguration mitzuteilen.

Wird der Mobilstation 15 nach Empfang der zweiten Konfigurationsaufforderung 41 wie auch für die erste Konfigurationsaufforderung 40 beschrieben die Möglichkeit gegeben, ihrerseits die PDCP-Protokollinstanzparameter aus einer von der Basisstation 16 zur Verfügung gestellten Auswahl auszusuchen, so können die von der Mobilstation 15 entsprechend ausgewählten und eingestellten PDCP-Protokollinstanzparameter in der für das erste Bestätigungssignal 55 beschriebenen Weise entsprechend im zweiten Bestätigungssignal 56 enthalten sein.

Mißlingt die Rekonfiguration der PDCP-Protokollinstanz 35, so kann wie beschrieben eine entsprechende Nachricht über das Scheitern, die auch als "PDCP Reconfiguration Failure"-Nachricht bezeichnet werden kann, von der Mobilstation 15 anstelle des zweiten Bestätigungssignals 56 zur Basisstation 16 zurückgesendet werden. In dieser Nachricht kann der Grund für das Fehlschlagen enthalten sein.

Die eingerichtete PDCP-Protokollinstanz 35 kann auch wieder abgebaut werden. Dieser Vorgang wird in diesem Ausführungsbeispiel ebenfalls als Konfiguration, wie auch der Aufbau und die Rekonfiguration der PDCP-Protokollinstanz 35 verstanden. Dazu schickt Basisstation 16 gemäß Figur 5 eine dritte Konfigurationsaufforderung 42 an die Mobilstation 15, die die PDCP-Protokollinstanzidentifikation enthält und nach deren Erhalt die Mobilstation 15 die PDCP-Protokollinstanz 35 abbaut. Die dritte Konfigurationsaufforderung 42 kann auch als PDCP Release Request bezeichnet werden.

Die dritte Konfigurationsaufforderung 42 kann von der Mobilstation 15 durch ein drittes Bestätigungssignal 57, das auch als "PDCP Release Confirm"-Nachricht bezeichnet werden kann, quittiert werden, um der Basisstation 16 den erfolgreichen Abbau der PDCP-Protokollinstanz 35 mitzuteilen.

Mißlingt der Abbau der PDCP-Protokollinstanz 35, so kann statt dem dritten Bestätigungssignal 57 eine Nachricht über das Scheitern des Abbaus von der Mobilstation 15 an die Basisstation 16 zurückgesandt werden, die auch als "PDCP Release Failure"-Nachricht bezeichnet werden kann und in der eventuell auch Informationen über den Grund des Fehlschlagens enthalten sein können.

Die hier beschriebenen Prozeduren können alle beispielsweise wie beschrieben von einem Protokoll zur Steuerung der Funkressourcen, das auch als RRC-Protokoll bezeichnet werden kann, ausgeführt werden. Das im UMTS-Standard bereits teilweise gemäß der genannten Veröffentlichung "RRC Protocol Specification" spezifizierte RRC-Protokoll enthält bereits Prozeduren zum Auf- und Abbau und zur Rekonfiguration von Trägern oder RB's. In diesen Prozeduren werden Nachrichten von der Basisstation 16 an die Mobilstation 15 und umgekehrt verschickt.

In dem Fall, in dem die hier beispielhaft beschriebene PDCP-Protokollinstanz 35 zum gleichen Zeitpunkt wie der zugeordnete Träger 45 auf-, abgebaut oder rekonfiguriert wird, ist es sinnvoll, die oben beschriebenen Mitteilungen 60, Konfigurationsaufforderungen 40, 41, 42, Bestätigungssignale 55, 56, 57 und Nachrichten über das Scheitern der jeweiligen Konfiguration der PDCP-Protokollinstanz 35 in die bereits gemäß der genannten Veröffentlichung "RRC Protocol Specification" definierten RRC-Nachrichten zu integrieren. Dies kann wie folgt geschehen:

Die erste Konfigurationsaufforderung 40 für den Aufbau der PDCP-Protokollinstanz 35 wird in die aus der genannten Veröffentlichung "RRC Protocol Specification" bekannte "Radio Bearer Setup"-Nachricht eingefügt. Mit dieser "Radio Bearer Setup"-Nachricht wird ein neuer Träger, in diesem Beispiel der Träger 45 gemäß Figur 3 aufgebaut. Da jedem Träger genau eine PDCP-Protokollinstanz zugeordent sein kann und eine PDCP-Protokollinstanz 35 auch nur mit einem Träger verbunden ist, muß mit dem aufzubauenden Träger 45 auch die PDCP-Protokollinstanz 35 aufgebaut werden. Deshalb können zusätzlich die PDCP-Protokollinstanzparameter für diese PDCP-Protokollinstanz 35 in der "Radio Bearer Setup"-Nachricht enthalten sein.

Der Aufbau des neuen Trägers 45 wird durch die Mobilstation 15 mit der "Radio Bearer Setup Complete"-Nachricht gemäß der genannten Veröffentlichung "RRC Protocol Specification" bestätigt. Diese "Radio Bearer Setup Complete"-Nachricht kann auch die Funktion des oben beschriebenen ersten Bestätigungssignals 55 übernehmen. Wird der Mobilstation 15 nach Empfang der ersten Konfigurationsaufforderung 40 wie beschrieben die Möglichkeit gegeben, ihrerseits die PDCP-Protokollinstanzparameter auszuwählen und die PDCP-Protokollinstanz 35 entsprechend einzustellen beziehungsweise zu konfigurieren, so kann die Information über die so ausgewählten PDCP-Protokollinstanzparameter der "Radio Bearer Setup Complete"-Nachricht hinzugefügt werden.

Mißlingt der Aufbau des neuen Trägers 45, so sendet die Mobilstation 15 gemäß der genannten Veröffentlichung "RRC Protocol Specification" eine "Radio Bearer Setup Failure"-Nachricht an die Basisstation 16. Ist der Aufbau auf Grund einer nicht zu erstellenden PDCP-Protokollinstanz 35, z.B. aufgrund von von der Basisstation 16 oder der Mobilstation 15 nicht unterstützten PDCP-Protokollinstanzparametern, fehlgeschlagen, so kann der "Radio Bearer Setup Failure"-Nachricht eine entsprechende Information über den Grund des Scheiterns des Aufbaus der PDCP-Protokollinstanz 35 hinzugefügt werden.

Zur Rekonfiguration des in diesem Beispiel beschriebenen Trägers 45 wird gemäß der genannten Veröffentlichung "RRC Protocol Specification" die "Radio Bearer Reconfiguration"-Nachricht von der Basisstation 16 an die Mobilstation 15 gesendet. Dieser Nachricht können Informationen entsprechend der oben beschriebenen zweiten Konfigurationsaufforderung 41 hinzugefügt werden, um ebenfalls die PDCP-Protokollinstanzparameter der entsprechenden PDCP-Protokollinstanz 35 zu ändern.

Um die bei der Rekonfiguration durchgeführten Änderungen des' Trägers 45 zu bestätigen, sendet die Mobilstation 15 als Antwort die gemäß der genannten Veröffentlichung "RRC Protocol Specification" bekannte "Radio Bearer Reconfiguration Complete"-Nachricht zurück zur Basisstation 16. Wird der Mobilstation 15 nach Empfang der zweiten Konfigurationsaufforderung 41 die Möglichkeit gegeben, ihrerseits die PDCP-Protokollinstanzparameter in der beschriebenen Weise auszuwählen und einzustellen, so daß die PDCP-Protokollinstanz 35 verändert beziehungsweise rekonfiguriert wird, so können die Informationen über die ausgewählten PDCP-Protokollinstanzparameter der "Radio Bearer Reconfiguration Complete"-Nachricht hinzugefügt werden.

Mißlingen die Änderungen beziehungsweise die Rekonfiguration des Trägers 45, so sendet die Mobilstation 15 gemäß der genannten Veröffentlichung "RRC Protocol Specification" die "Radio Bearer Reconfiguration Failure"-Nachricht zurück zur Basisstation 16. Ist das Fehlschlagen auf eine nicht durchführbare, weil beispielsweise nicht von der Basisstation 16 oder der Mobilstation 15 unterstützte Änderung der PDCP-Protokollinstanzparameter zurückzuführen, kann der Grund dafür ebenfalls der "Radio Bearer Reconfiguration Failure"-Nachricht hinzugefügt werden.

Für die genannten Fälle ist es besonders vorteilhaft, die schon vorhandene "RB identity" auch als Identifikation für die PDCP-Protokollinstanz 35 wie beschrieben zu verwenden, um damit ein zusätzliches Informationselement einzusparen.

Die hier genannten Fälle zur Konfiguration der PDCP-Protokollinstanz 35 durch Aufbau, Rekonfiguration und Abbau der PDCP-Protokollinstanz 35 werden im hier beschriebenen Ausführungsbeispiel von der Basisstation 16 angestoßen, können jedoch auch von der Mobilstation 15 initiiert werden.

Im folgenden wird der beschriebene Nachrichtenaustausch zwischen Mobilstation 15 und Basisstation 16 weiter konkretisiert beschrieben. Dabei umfaßt die Mobilstation 15 einen Digitalrechner und eine Mobilfunkeinheit, über die der Digitalrechner Daten an das bzw. aus dem Mobilfunknetz 30 senden bzw. empfangen kann. Diese Daten können beispielsweise in das bzw. aus dem Internet weitergeleitet werden, welches in diesem Ausführungsbeispiel an das Mobilfunknetz 30 angeschlossen ist.

Die Mobilstation 15 macht sich nach dem Einschalten dem Mobilfunknetz 30 bekannt und schickt zu einem geeigneten Zeitpunkt eine gemäß dem UMTS-Standard vorgesehene "UE-Capability-Information"-Nachricht 65 (UE = User Equipment) gemäß Figur 6 an das Mobilfunknetz 30, in der es dem Mobilfunknetz seine Fähigkeiten und seinen Leistungsumfang bekanntgibt. Diese "UE-Capability-Information"-Nachricht 65 wird nun erfindungsgemäß erweitert um ein "PDCP-capability"-Informationselement, das der beschriebenen Mitteilung 60 entspricht. Die "UE-Capability-Information"-Nachricht 65 mit dem "PDCP-capability"-Informationselement 60 sind in Figur 6 gezeigt. In Figur 6 kennzeichnen 61 und 62 außerdem jeweils ein Informationselement der "UE-Capability-Information"-Nachricht 65, das die Fähigkeiten der Mobilstation 15 bezüglich von Funktionen darstellt, die unabhängig von der PDCP-Protokollinstanz 35 sind.

Das "PDCP-capability"-Informationselement 60 enthält Informationen über die Multiplex- und die Kompressionsfähigkeiten der Mobilstation 15. In Figur 6 kennzeichnet 111 ein erstes Subinformationselement, das im "PDCP-capability"-Informationselement 60 enthalten ist und beispielsweise ein Bit belegt, das anzeigt, ob die Mobilstation 15 Multiplexing unterstützt oder mehrere Bits belegt,, die angeben, wieviele Paketdatenströme verschiedener PDP-Kontexte maximal auf einen Träger gemultiplext werden dürfen. In Figur 6 kennzeichnet 112 ein zweites Subinformationselement, das im "PDCP-capability"-Informationselement 60 enthalten ist und entsprechend anzeigt, ob die Mobilstation 15 den ersten Kompressionsalgorithmus 50 unterstützt. In Figur 6 kennzeichnet 113 ein drittes Subinformationselement, das im "PDCP-capability"-Informationselement 60 enthalten ist und entsprechend anzeigt, ob die Mobilstation 15 den zweiten Kompressionsalgorithmus 51 unterstützt. In Figur 6 kennzeichnet 114 ein viertes Subinformationselement, das im "PDCP-capability"-Informationselement 60 enthalten ist und entsprechend von der Mobilstation 15 unterstützte Kompressionsparameter für den ersten Kompressionsalgorithmus 50 angibt. In Figur 6 kennzeichnet 115 ein fünftes Subinformationselement, das im "PDCP-capability"-Informationselement 60 enthalten ist und entsprechend von der Mobilstation 15 unterstützte Kompressionsparameter für den zweiten Kompressionsalgorithmus 51 angibt. Das vierte Informationselement 114 und das fünfte Informationselement 115 stellen dabei beispielsweise die maximale Länge der dem jeweiligen Kompressionsalgoritmus 50, 51 zugeordneten Codebücher, das heißt die maximale Anzahl der Einträge dieser Codebücher dar.

Durch das Versenden der "UE-Capability-Information"-Nachricht 65 von der Mobilstation 15 an die Basisstation 16 erhält die Netzwerkeinheit 80 des Mobilfunknetzes 30 über die Basisstation 16 Informationen darüber, welche Kompressionsalgorithmen von der Mobilstation 15 unterstützt werden. Den Empfang der "UE-Capability-Information"-Nachricht 65 quittiert die Netzwerkeinheit 80 über die Basisstation 16 mit einer "Capability-Information-Confirm"-Nachricht, die der Mobilstation 15 von der Basisstation 16 zugesandt wird.

Es wird nun ausgehend von der gemäß Figur 3 beschriebenen PDCP-Protokollinstanz 35 angenommen, daß die Mobilstation 15 sowohl den ersten Kompressionsalgorithmus 50 als auch den zweiten Kompressionsalgorithmus 51 unterstützt. Der zweite Kompressionsalgorithmus 51 ist dabei, wie beschrieben, dazu geeignet, Nutzdaten zu komprimieren, die mittels der Transportschicht-Protokolle und den Netzwerkprotokollen zusammengestellt wurden. Es soll weiterhin im Einklang mit der in Figur 3 beschriebenen PDCP-Protokollinstanz 35 angenommen werden, daß die Mobilstation 15 auch das Multiplexen von Paketdatenströmen verschiedener PDP-Kontexte 21, 22 unterstützt.

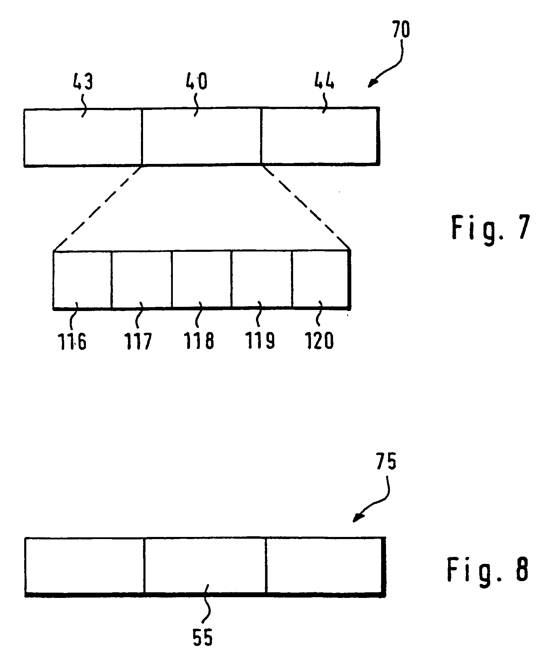

Sollen nun Paketdaten von der Basisstation 16 des Mobilfunknetzes 30 zur Mobilstation 15 gesendet werden, so muß zu diesem Zweck eine Verbindung über die UMTS-Luftschnittstelle, also der Träger 45 beziehungsweise ein Radio Bearer RB aufgebaut werden. Dazu sendet das die Basisstation 16 die "Radio-Bearer-Setup"-Nachricht als Trägerkonfigurationsnachricht 70 gemäß Figur 7 wie beschrieben an die Mobilstation 15, wobei in der Trägerkonfigurationsnachricht 70 einige Parameter für den Aufbau des Trägers 45 enthalten sind. Erfindungsgemäß wird diese Trägerkonfigurationsnachricht 70 nun gemäß Figur 7 um ein "PDCP-Info"-Informationselement erweitert, das der ersten Konfigurationsaufforderung 40 entspricht und Informationen darüber enthält, wie die neu aufzubauende PDCP-Protokollinstanz 35 konfiguriert werden soll. In Figur 7 kennzeichnen 43 und 44 andere Informationselemente, die unabhängig von der Konfigurierung der PDCP-Protokollinstanz 35 sind. In Figur 7 kennzeichnet 116 ein sechstes Subinformationselement, das im "PDCP-Info"-Informationselement 40 enthalten ist und beispielsweise vier Bit belegt, die angeben, von wie vielen verschiedenen PDP-Kontexten Paketdatenströme auf den neu aufgebauten Träger 45 gemultiplext werden sollen. Ist diese Anzahl gleich eins, so wird kein Multiplexen genutzt. In Figur 7 kennzeichnet 117 ein siebtes Subinformationselement, das im "PDCP-Info"-Informationselement 40 enthalten ist und eine Liste beinhaltet, die Identifikatoren für die Adressierung von PDP-Kontexten entsprechend der im sechsten Subinformationselement 116 angegebenen Anzahl umfaßt. In Figur 7 kennzeichnet 118 ein achtes Subinformationselement, das im "PDCP-Info"-Informationselement 40 enthalten ist und die Anzahl von Kompressionsalgorithmen enthält, die in der zu konfigurierenden PDCP-Protokollinstanz 35 verwendet werden sollen. In Figur 7 kennzeichnet 119 ein neuntes Subinformationselement, das im "PDCP-Info"-Informationselement 40 enthalten ist und eine Liste dieser Kompressionsalgorithmen enthält. In Figur 7 kennzeichnet 120 ein zehntes Subinformationselement, das im "PDCP-Info"-Informationselement 40 enthalten ist und jeweils einen Kompressionsparameter oder eine Liste von Kompressionsparametern für die im neunten Subinformationselement 119 angegebenen Kompressionsalgorithmen angibt.

In einer beispielhaften Ausführung für das "PDCP-Info"-Informationselement 40 könnten die in den zugehörigen Subinformationselementen enthaltenen Werte wie folgt gewählt sein:
sechstes Subinformationselement 116 => 1
siebtes Subinformationselement 117 => 22
achtes Subinformationselement 118 => 1
neuntes Subinformationselement 119 => 51
zehntes Subinformationselement 120 => 16.

Dies bedeutet, daß ein PDP-Kontext mit dem Identifikator 22 die PDCP-Protokollinstanz 35 zum Multiplexen ihrer Paketdatenströme auf den Träger 45 nutzt, wobei in der PDCP-Protokollinstanz 35 ein Kompressionsalgorithmus mit der Nummer 51 und der Codebuchlänge 16 genutzt werden soll. Dies entspricht einer Konfiguration der PDCP-Protokollinstanz 35 gemäß Figur 3, bei der nur der zweite PDP-Kontext 22 über den zweiten Zugriffspunkt 102, den zweiten Kompressionsalgorithmus 51 und den Träger 45 mit der RLC-Verbindungssteuerungsschicht 10 der Mobilstation 15 verbunden ist, wobei ein Multiplexen an sich nicht erforderlich ist, da nur der Paketdatenstrom des zweiten PDP-Kontextes 22 über den Träger 45 zur RLC-Verbindungssteuerungsschicht 10 der Mobilstation 15 übertragen wird. Der erste PDP-Kontext 21 würde bei dieser Konfiguration entgegen dem beschriebenen Beispiel nach Figur 3 nicht auf die PDCP-Protokollinstanz 35 zugreifen.

Wenn das RRC-Protokoll in der Mobilstation 15 die Trägerkonfigurationsnachricht 70 empfängt und die darin enthaltenen PDCP-Protokollinstanzparameter den Fähigkeiten der Mobilstation 15 entsprechen, dann wird die Funkressourcensteuerung 95 der Mobilstation 15 neben dem Träger 45 auch die PDCP-Protokollinstanz 35 kreieren und sie den PDCP-Protokollinstanzparametern entsprechend konfigurieren. Anschließend bestätigt das RRC-Protokoll den Aufbau des Trägers 45 und der PDCP-Protokollinstanz 35 mit einer "Radio-Bearer-Setup-Complete"-Nachricht, die eine Quittierungsnachricht 75 darstellt und die das erste Bestätigungssignal 55 gemäß Figur 8 enthält. Somit ist der Datentransfer über den neuen Träger 45 und über die neue PDCP-Protokollinstanz 35 möglich. Ist der Aufbau des Trägers 45 und/oder der PDCP-Protokollinstanz 35 aus irgendeinem Grund nicht möglich, so wird eine "Radio-Bearer-Setup-Failure"-Nachricht von der Mobilstation 15 an die Basisstation 16 gesandt, die eine Information über den Grund des gescheiterten Aufbaus enthalten kann.

Die solchermaßen eingerichtete PDCP-Protokollinstanz 35, die den ebenfalls eingerichteten Träger 45 nutzt, kann sinnvollerweise auf zwei weisen um- oder rekonfiguriert werden.

Im ersten Fall, das heißt wenn der von der PDCP-Protokollinstanz 35 genutzte Träger 45 auch umkonfiguriert werden muß, ist es sinnvoll beide Rekonfigurationen zusammenzufassen. In eine bereits existierende und von der Basisstation 16 an die Mobilstation 15 zu übertragende "Radio-Bearer-Reconfiguration"-Nachricht wird dabei ein "PDCP-Reconfiguration-Info"-Informationselement eingefügt, das ähnlich oder genauso aussieht wie das oben beschriebene "PDCP-Info"-Informationselement 40 und der zweiten Konfigurationsaufforderung 41 entspricht. Damit können die von der PDCP-Protokollinstanz 35 genutzten Kompressionsalgorithmen, deren Kompressionsparameter und die Liste der auf die PDCP-Protokollinstanz 35 zugreifenden PDP-Kontexte verändert beziehungsweise rekonfiguriert werden. Die mittels RRC-Protokoll von der Mobilstation 15 anschließend an die Basisstation 16 verschickte "Radio-Bearer-Reconfiguration-Complete"-Nachricht bestätigt dann mit der Rekonfiguration des Trägers 45 auch die Rekonfiguration der PDCP-Protokollinstanz 35.

Im zweiten Fall, das heißt wenn der von der PDCP-Protokollinstanz 35 genutzte Träger 45 nicht umkonfiguriert werden muß, ist es sinnvoll eine eigens für die Konvergenzprotokollschicht 1 der Mobilstation 15 genutzte "PDCP-Reconfiguration"-Nachricht von der Basisstation 16 an die Mobilstation 15 zu versenden, beispielsweise in Form der beschriebenen "PDCP reconfigure request"-Nachricht, die neben der zweiten Konfigurationsaufforderung 41, die die Rekonfigurationsinformationen enthält, auch die PDCP-Protokollinstanzidentität der PDCP-Protokollinstanz 35 oder die Identität des ihr zugeordneten Trägers 45 umfaßt.

Der Abbau der PDCP-Protokollinstanz 35 findet zweckmäßigerweise automatisch mit dem Abbau des ihr zugeordneten Trägers 45 durch eine "Radio-Bearer-Release"-Nachricht statt.

Die Konfiguration der PDCP-Protokollinstanz 35 der Mobilstation 15 mit den zu verwendenden Kompressionsalgorithmen, Kompressionsparametern und Multiplexeigenschaften wird von der Basisstation derart über die entsprechenden Konfigurationsaufforderungen 40, 41, 42 vorgegeben, daß den von der zu konfigurierenden PDCP-Protokollinstanz 35 verwendeten Kompressionsalgorithmen jeweils ein Dekompressionsalgorithmus in der Basisstation 16 entspricht, um die von der zu konfigurierenden PDCP-Protokollinstanz 35 komprimierten Protokollsteuerinformationen oder Nutzdaten dekomprimieren zu können. Weiterhin werden aus dem gleichen Grund für die Dekompression in der Basisstation 16 die auch von der zu konfigurierenden PDCP-Protokollinstanz 35 verwendeten Kompressionsparameter verwendet. Außerdem wird der durch die zu konfigurierende PDCP-Protokollinstanz 35 gemultiplexte Paketdatenstrom als Nutzdatenstrom zur Basisstation 16 übertragen und dort in Abhängigkeit der Multiplexeigenschaften der zu konfigurierenden PDCP-Protokollinstanz 35 demultiplext, um den empfangenen Nutzdatenstrom auf die entsprechenden PDP-Kontexte in der Netzwerkschicht 6 der Basisstation 16 aufteilen zu können.

## Patentansprüche

1. Verfahren zum Betreiben eines Mobilfunknetzes (30),
in dem Nutzdaten durch eine erste Konvergenzprotokollschicht (1)
einer ersten Funkstation (15)
vor dem Übertragen
an eine zweite Konvergenzprotokollschicht (2)
einer zweiten Funkstation (16)
zu mindestens einer ersten Dateneinheit
zusammengesetzt werden,
wobei die Nutzdaten von mindestens einem Nutzer (21, 22) in einer Netzwerkschicht (5) an die erste Konvergenzprotokollschicht (1) geliefert werden,
wobei mindestens eine Protokollinstanz (35) der ersten Konvergenzprotokollschicht (1) in Abhängigkeit einer von der zweiten Funkstation (16) empfangenen Konfigurationsaufforderung (40, 41, 42) konfiguriert wird,
um aus den von dem mindestens einen Nutzer (21, 22) empfangenen Daten die mindestens eine erste Dateneinheit zu bilden und
durch einen Träger (45)
an eine Verbindungssteuerungsschicht (10) zu übertragen, **dadurch gekennzeichnet, dass** bei der Konfiguration
eine Protokollinstanzidentität festgelegt wird,
durch die die Protokollinstanz (35) referenzierbar ist,
dass bei der Konfiguration der Träger (45) festgelegt wird, über den die Nutzdaten von der Protokollinstanz (35) an die Verbindungssteuerungsschicht (10) übertragen werden,
und dass die Protokollinstanzidentität derart festgelegt wird, dass sie der Identität des ihr zugeordneten Trägers (45) entspricht,
wobei die Konfigurationsaufforderung (40, 41, 42) in dem Fall, in dem ein Träger (45) mittels einer Trägerkonfigurationsnachricht (70) aufgebaut, rekonfiguriert oder abgebaut wird, in die Trägerkonfigurationsnachricht eingefügt wird.

2. Verfahren nach Anspruch 1, **dadurch gekennzeichnet, dass** bei der Konfiguration mindestens ein Kompressionsalgorithmus (50, 51) festgelegt wird, durch den Protokollkontrolldaten für die Übertragung der mindestens einen ersten Dateneinheit oder die durch die mindestens eine erste Dateneinheit zu übertragenden Nutzdaten selbst komprimiert werden und dem ein Dekompressionsalgorithmus in der zweiten Funkstation (16) entspricht, um die Protokollkontrolldaten oder die Nutzdaten zu dekomprimieren.

3. Verfahren nach Anspruch 2, **dadurch gekennzeichnet, dass** mit der Festlegung des mindestens einen Kompressionsalgorithmus (50, 51) mindestens ein Kompressionsparameter festgelegt wird, wobei dieser Kompressionsparameter auch in der zweiten Funkstation (16) zur Dekompression verwendet wird.

4. Verfahren nach Anspruch 1, 2 oder 3, **dadurch gekennzeichnet, dass** bei der Konfiguration Multiplexeigenschaften festgelegt werden, durch die die Nutzer (21, 22) vorgegeben werden, deren durch die mindestens eine Protokollinstanz (35) aus den jeweils empfangenen Nutzdaten zusammengesetzte Dateneinheiten gemultiplext durch den Träger (45) an die Verbindungssteuerungsschicht (10) übertragen werden, wobei der auf diese Weise gebildete Nutzdatenstrom nach Empfang in der zweiten Funkstation (16) in Abhängigkeit dieser Multiplexeigenschaften demultiplext wird.

5. Verfahren nach einem der vorherigen Ansprüche, **dadurch gekennzeichnet, dass** mit der Konfigurationsaufforderung (40, 41, 42) mindestens eine von der zweiten Funkstation (16) unterstützte Auswahl an alternativen Einstellungen für die Protokollinstanz (35) vorgegeben wird.

6. Verfahren nach Anspruch 5, **dadurch gekennzeichnet, dass** von der ersten Funkstation (15) ein Bestätigungssignal (55, 56, 57) an die zweite Funkstation (16) übertragen wird, in dem die von der ersten Funkstation (15) ausgewählte und vorgenommene Einstellung der zweiten Funkstation (16) mitgeteilt wird.

7. Verfahren nach einem der vorherigen Ansprüche, **dadurch gekennzeichnet, dass** mit der Konfigurationsaufforderung (40, 41, 42) mindestens eine Einstellung für die Protokollinstanz (35) fest vorgegeben wird.

8. Verfahren nach einem der vorherigen Ansprüche, **dadurch gekennzeichnet, dass** von der ersten Funkstation (15) an die zweite Funkstation (16) vor Erhalt der Konfigurationsaufforderung (40, 41, 42) eine Mitteilung (60) übertragen wird, die angibt, welche Einstellungen der mindestens einen Protokollinstanz (35) von der ersten Funkstation (15) unterstützt werden.

9. Verfahren nach Anspruch 8, **dadurch gekennzeichnet, dass** die Mitteilung (60) zusammen mit einer Nachricht (65) über die Fähigkeiten und den Leistungsumfang der ersten Funkstation (15) an die zweite Funkstation (16) übertragen wird.

10. Verfahren nach einem der vorherigen Ansprüche, **dadurch gekennzeichnet, dass** mittels der Konfigurationsaufforderung (40) die mindestens eine Protokollinstanz (35) aufgebaut wird.

11. Verfahren nach einem der vorherigen Ansprüche, **dadurch gekennzeichnet, dass** mittels der Konfigurationsaufforderung (41) die Einstellungen einer aufgebauten Protokollinstanz (35) geändert oder rekonfiguriert werden.

12. Verfahren nach einem der vorherigen Ansprüche, **dadurch gekennzeichnet, dass** mittels der Konfigurationsaufforderung (42) eine aufgebaute Protokollinstanz (35) abgebaut wird.

13. Verfahren nach Anspruch 1 und 6, **dadurch gekennzeichnet, dass** das Bestätigungssignal (55, 56, 57) in eine Nachricht (75) eingefügt wird, mit der die erste Funkstation (15) den Aufbau oder die Rekonfiguration des Trägers (45) quittiert.

## Claims

1. Method for operation of a mobile radio network (30) in which payload data is combined to form at least one first data unit by a first convergent protocol layer (1) in a first radio station (15) before transmission to a second convergent protocol layer (2) in a second radio station (16) with the payload data being passed from at least one user (21, 22) in a network layer (5) to the first convergent protocol layer (1), with at least one protocol instance (35) in the first convergent protocol layer (1) being configured as a function of a configuration request (40, 41, 42) received from the second radio station (16) in order to form the at least one first data unit from the data received from the at least one user (21, 22) and to transmit this by means of a carrier (45) to a network control layer (10), **characterized in that**, during the configuration process, a protocol instance identity is defined by means of which the protocol instance (35) can be referenced, **in that**, during the configuration process, the carrier (45) is defined via which the payload data will be transmitted from the protocol instance (35) to the network control layer (10), and **in that** the protocol instance identity is defined in such a manner that it corresponds to the identity of the carrier (45) associated with it, with the configuration request (40, 41, 42) being inserted into the carrier configuration message in the situation in which a carrier (45) is being set up, reconfigured or cleared by means of a carrier configuration message (70).

2. Method according to Claim 1, **characterized in that** during the configuration process, at least one compression algorithm (50, 51) is defined, by means of which protocol monitoring data is compressed for the transmission of the at least one first data unit or the payload data itself to be transmitted by means of the at least one first data unit, and to which a decompression algorithm in the second radio station (16) corresponds, in order to decompress the protocol monitoring data or the payload data.

3. Method according to Claim 2, **characterized in that**, with the definition of the at least one compression algorithm (50, 51) at least one compression parameter is defined, with this compression parameter also being used for decompression in the second radio station (16).

4. Method according to Claim 1, 2 or 3, **characterized in that**, during the configuration process, multiplexing characteristics are defined which predetermine the users (21, 22) whose data units which have been combined from the respectively received payload data by the at least one protocol instance (35) will be transmitted in a multiplexed form by means of the carrier (45) to the network control layer (10), with the payload data stream that has been formed in this way being demultiplexed as a function of these multiplexing characteristics after reception in the second radio station (16).

5. Method according to one of the preceding claims, **characterized in that** the configuration request (40, 41, 42) predetermines at least one selection, which is supported by the second radio station (16), of alternative settings for the protocol instance (35).

6. Method according to Claim 5, **characterized in that** the first radio station (15) transmits a confirmation signal (55, 56, 57) to the second radio station (16), in which the setting which has been selected and implemented by the first radio station (15) is signalled to the second radio station (16).

7. Method according to one of the preceding claims, **characterized in that** the configuration request (40, 41, 42) predetermines, in a fixed manner, at least one setting for the protocol instance (35).

8. Method according to one of the preceding claims, **characterized in that** the first radio station (15) transmits a message (60) to the second radio station (16) before reception of the configuration request (40, 41, 42), which message (60) indicates what settings of the at least one protocol instance (35) are supported by the first radio station (15).

9. Method according to Claim 8, **characterized in that** the message (60) is transmitted to the second radio station (16) together with a message (65) about the capabilities and the performance of the first radio station (15).

10. Method according to one of the preceding claims, **characterized in that** the configuration request (40) is used to set up the at least one protocol instance (35).

11. Method according to one of the preceding claims, **characterized in that** the configuration request (41) is used to change or reconfigure the settings of a protocol instance (35) which has been set up.

12. Method according to one of the preceding claims, **characterized in that** the configuration request (42) is used to clear a protocol instance (35) which has been set up.

13. Method according to Claim 1 and 6, **characterized in that** the confirmation signal (55, 56, 57) is inserted into a message (75) which the first radio station (15) uses to acknowledge the setting up or reconfiguration of the carrier (45).

## Revendications

1. Procédé de fonctionnement d'un réseau de téléphonie mobile (30), rassemblant des données utiles en au moins une première unité de données par une première couche de protocole de convergence (1) d'une première station radio (15), avant de les transmettre à une deuxième couche de protocole de convergence (2) d'une deuxième station radio (16), les données utiles d'au moins un utilisateur (21, 22) dans une couche de réseau (5) étant livrées à la première couche de protocole de convergence (1), au moins une instance de protocole (35) de la première couche de protocole de convergence (1) étant configurée en fonction d'une exigence de configuration (40, 41, 42) reçue de la deuxième station radio (16) pour former au moins une première unité de données à partir des données reçues par le ou les utilisateurs (21, 22) et la transmettre par un porteur (45) à une couche de commande de liaison (10),
**caractérisé en ce que**
lors de la configuration on détermine une identité d'instance de protocole qui référence l'instance de protocole (35),
lors de la configuration on détermine le porteur (45) transmettant les données utiles par l'instance de protocole (35) à la couche de commande de liaison (10), et
l'identité d'instance de protocole est déterminée de telle sorte qu'elle correspond à l'identité du porteur (45) associé à elle,
l'exigence de configuration (40, 41, 42) étant insérée dans le cas où un porteur (45) est construit, reconfiguré ou détruit à l'aide d'une information de configuration de porteur (70), dans l'information de configuration de porteur.

2. Procédé selon la revendication 1,
**caractérisé en ce que**
lors de la configuration on détermine un algorithme de compression (50, 51) qui comprime des données de contrôle de protocole pour la transmission de la ou des premières unités de données ou les données utiles à transmettre par la ou les premières unités de données elles-mêmes et auquel correspond un algorithme de décompression dans la deuxième station radio (16) pour décomprimer les données de contrôle de protocole ou les données utiles.

3. Procédé selon la revendication 2,
**caractérisé en ce qu'**
avec la détermination du ou des algorithmes de compression (50, 51) on détermine au moins un paramètre de compression, ce paramètre de compression étant aussi utilisé dans la deuxième station radio (16) pour la décompression.

4. Procédé selon la revendication 1, 2 ou 3
**caractérisé en ce que**
lors de la configuration on détermine des propriétés de multiplexage définissant les utilisateurs (21, 22) dont les unités de données constituées par la ou les instances de protocole (35) à partir des données utiles correspondantes reçues multiplexées par le porteur (45) sont transmises à la couche de commande de liaison (10), le flux de données utiles formé de cette manière étant démultiplexé après réception dans la deuxième station radio (16) en fonction de ces propriétés de multiplexage.

5. Procédé selon une des revendications précédentes, **caractérisé en ce qu'**
avec l'exigence de configuration (40, 41, 42) on définit au moins une sélection supportée par la deuxième station radio (16) de réglages alternatifs pour l'instance de protocole (35).

6. Procédé selon la revendication 5,
**caractérisé en ce que**
la première station radio (15) transmet à la deuxième station radio (16) un signal d'accusé de réception (55, 56, 57) qui fournit le réglage de la deuxième station (16) sélectionné et exécuté par la première station radio (15).

7. Procédé selon une des revendications précédentes, **caractérisé en ce qu'**
avec l'exigence de configuration (40, 41, 42) on définit au moins un réglage pour l'instance de protocole (35).

8. Procédé selon une des revendications précédentes, **caractérisé en ce que**
la première station radio (15) transmet à la deuxième station radio (16) avant la réception de l'exigence de configuration (40, 41, 42) un message (60) qui indique les réglages de la ou des instances de protocole (35) qui sont supportés par la première station radio (15).

9. Procédé selon la revendication 8,
**caractérisé en ce que**
le message (60) est transmis à la deuxième station radio (16) avec une information (65) sur les capacités et la puissance globale de la première station radio (15).

10. Procédé selon une des revendications précédentes, **caractérisé en ce que**
la ou les instances de protocole (35) sont construites à l'aide de l'exigence de configuration (40).

11. Procédé selon une des revendications précédentes, **caractérisé en ce que**
les réglages d'une instance de protocole (35) construite sont modifiés ou reconfigurés à l'aide de l'exigence de configuration (41).

12. Procédé selon une des revendications précédentes, **caractérisé en ce qu'**
une instance de protocole (35) construite est détruite à l'aide de l'exigence de configuration (42).

13. Procédé selon la revendication 1 et la revendication 6,
**caractérisé en ce que**
le signal d'accusé de réception (55, 56, 57) est inséré dans une information (75) avec laquelle la première station radio (15) accuse réception de la construction ou de la reconfiguration du porteur (45).
